# EUROPEAN PATENT SPECIFICATION

(11) **EP 4 146 438 B1**
(45) Date of publication and mention of the grant of the patent: **13.03.2024**
(21) Application number: 21725842.5
(22) Date of filing: 05.05.2021
(51) Int. Cl.: B25J 9/00, B25J 15/06, B25J 9/12

(54) **END-EFFECTOR FOR A DELTA ROBOT**
ENDEFFEKTOR FÜR EINEN DELTAROBOTER
EFFECTEUR TERMINAL POUR UN ROBOT DELTA

(30) Priority: 06.05.2020 NL 2025513
(43) Date of publication of application: 15.03.2023
(73) Proprietor: Blueprint Holding B.V., 3445 BC Woerden (NL)
(72) Inventor: PETERS, Vincentius Alphonsus Jozef, 3741 TJ Baarn (NL); KOOT, Hessel Michiel, 3452 ER Vleuten (NL)
(74) Representative: Nederlandsch Octrooibureau
(86) International application number: PCT/NL2021/050292
(87) International publication number: WO 2021/225438

(56) References cited:
- CN-A- 104 191 427
- CN-B- 104 858 867
- US-B2- 9 649 771

## Description

### FIELD OF THE INVENTION

The invention relates to an end-effector for a delta robot comprising three actuated robot arms for coupling to the end-effector to allow moving the end-effector by the robot arms. The end-effector comprises a housing having a vacuum connection for connecting to an external vacuum source, and having a main duct in fluid communication with the vacuum connection; and a hollow shaft mounted in the housing to be rotatable around a longitudinal axis of the hollow shaft, wherein the hollow shaft has a hollow interior, a proximal shaft opening at a proximal end of the hollow shaft inside the housing to provide fluid communication between the hollow interior and the main duct, the hollow interior extends along the longitudinal axis of the hollow shaft to a distal end of the hollow shaft, and the distal end projects from the housing, the distal end allowing for connecting a further device thereto and to pass vacuum from the interior of the hollow shaft and rotation by the hollow shaft to the further device, such as a pick-op device for picking up an object by vacuum suction. The invention further relates to a delta robot having such end-effector.

### BACKGROUND OF THE INVENTION

Delta robots are widely used for displacing objects from one location to another or for repositioning objects. An object is picked up by a pickup device provided at the distal end of the hollow shaft of the end-effector of the delta robot through vacuum suction by vacuum passed from the vacuum source, such as a vacuum pump, by the end-effector to the pickup device. The vacuum can be switched on and off for picking up and releasing the object by the pickup device mounted on the hollow shaft of the end-effector. The object can be reoriented by rotation of the hollow shaft. The arms of the delta robot which are coupled to the end-effector allow moving around the end-effector, and thus the object held by the pickup device, in three translation degrees of freedom.

Each robot arm has an upper arm segment and a lower arm segment that are coupled by a hinge joint allowing for one degree of freedom rotational movement. The upper arm is generally actuated to provide rotational movement in a vertical plane. The lower arm has two parallel rods coupled to the end-effector. Delta robots are extensively employed for moving products, for instance, for taking one or more products from a product supply conveyor into a packing box or for taking one or more products form a product supply conveyor to an intermediate device for further (packing) operations.

However, present day delta robots have some limitations, especially with respect to the speed at which they can operate and the reach of the end-effector. Rotation of the hollow shaft of the end-effector is achieved by a servo motor together with a reductor mounted on top of the housing. Such a delta robot is for example disclosed in document CN 104858867. The known constructions add quite a considerable mass to the end-effector and cause the end-effector to extend in the upward direction, both of which are speed limiting for movements of the end-effector. The extension in the upward direction causes reach limitations as well since the upper extension may come into conflict with the robot arms. In alternative designs, a driving shaft is coupled between the end-effector and the central platform on which the robot arms are mounted and actuated from. Rotation of driving shaft by an actuator on the central platform is passed by the driving shaft to the hollow shaft in the end-effector. Such a driving shaft configuration provides speed and reach limitations as well to the delta robot.

Switching of the vacuum to the hollow shaft requires venting and evacuating rather large volumes in present designs, which drastically reduces the speed at which an object can be picked up and released again. Applications in which delta robots are employed could be improved by an enhancement of the speed and the reach at which delta robots are operated.

### SUMMARY OF THE INVENTION

It is an objective of the invention to provide an end-effector that allows a delta robot to be operated at higher speeds.

It is another or alternative objective of the invention to provide an end-effector having a reduced mass.

It is yet another or alternative objective of the invention to provide an end-effector providing an even mass distribution to allow a balanced movement.

It is yet another or alternative objective of the invention to provide an end-effector providing enhanced reach of the delta robot.

It is yet another or alternative objective of the invention to provide an end-effector that allows a fast switching on and releasing of the vacuum to the hollow shaft.

It is yet another or alternative objective of the invention to provide an end-effector having a small volume that requires venting and evacuating for releasing and switching on the vacuum in the hollow shaft.

At least one of the above objectives is achieved by an end-effector for a delta robot comprising actuated robot arms for coupling to the end-effector to allow moving the end-effector by the robot arms, the end-effector comprising
- a housing having a vacuum connection for connecting to an external vacuum source, and having a main duct in fluid communication with the vacuum connection;
- a hollow shaft mounted in the housing to be rotatable around a longitudinal axis of the hollow shaft, wherein the hollow shaft has a hollow interior, a proximal shaft opening at a proximal end of the hollow shaft inside the housing to provide fluid communication between the hollow interior and the main duct, the hollow interior extends along the longitudinal axis of the hollow shaft to a distal end of the hollow shaft, and the distal end of the hollow shaft projects from the housing, the distal end allowing for connecting a further device thereto and to pass vacuum from the interior of the hollow shaft and rotation by the hollow shaft to the further device, such as a pick-op device for picking up an object by vacuum suction;
- a vacuum valve arranged in the main duct of the housing between the proximal shaft opening and the vacuum connection, wherein the vacuum valve provides for an open position to provide fluid communication between the proximal shaft opening and the vacuum connection to allow providing a vacuum in the hollow shaft when the vacuum connection is connected to a vacuum source and the vacuum valve provides for a closed position to close fluid communication between the proximal shaft opening and the vacuum connection; and
- a motor attached to the housing for rotating the hollow shaft around its longitudinal axis with respect to the housing,
   wherein the motor is arranged in the housing around the longitudinal axis of the hollow shaft, the proximal shaft opening is transverse to the longitudinal axis of the hollow shaft and provides fluid connection between the interior of the hollow shaft and a main duct end section of the main duct, which main duct end section is adjacent to the proximal shaft opening and extends along the longitudinal axis of the hollow shaft, and the vacuum valve in the closed position closes on or in the main duct end section. The end-effector can be made very compact with effectively only the volume of the interior of hollow shaft to be evacuated and vented for passing or releasing vacuum in the further device arranged at the distal end of the hollow shaft.

In an embodiment the motor is an electrical motor having a rotor and a stator, the rotor being attached to the hollow shaft and the stator being attached to the housing.

In an embodiment the electrical motor is a brushless torque motor allowing for a position readout of the rotor through the electrical currents and voltages for driving the motor, optionally by at least one of superposing an alternating voltage and measuring self-induction of motor coils of the motor, and measuring counter-electromotive force of motor coils of the motor, which allows determining the position of the motor and therefore of the rotational position of the hollow shaft without a separate position sensor to save on mass and volume of the end-effector.

In an embodiment the vacuum valve in the closed position is arranged in proximity to the proximal shaft opening, which provides for a minimum volume to be vented and evacuated when operating the further device by vacuum switching.

[**16**] In an embodiment the vacuum valve is arranged transverse to the longitudinal axis of the hollow shaft and is movable along a direction of the longitudinal axis of the hollow shaft towards the hollow shaft for the closed position of the vacuum valve, which is an advantageous configuration to provide for a minimum volume to be vented and evacuated when operating the further device by vacuum switching.

In an embodiment a ridge is provided in or delimits the main channel end section, and the vacuum valve closes against the ridge.

In an embodiment the main duct end section connects to a main duct transverse section of the main duct which is transverse to the main duct end section, and the vacuum valve closes in the main duct transverse section.

In an embodiment a seal is provided between a wall of the main duct in the housing and an outer circumference of the proximal end of the hollow shaft.

In an embodiment the seal comprises a PS seal arranged on the wall of the main duct, and a lip of the PS seal seals against the outer circumference of the proximal end of the hollow shaft.

In an embodiment a vent conduit is provided in the housing in fluid communication with a vent opening into the main duct end section between the vacuum valve in the closed position thereof and the hollow shaft to allow releasing the vacuum in the interior of the hollow shaft, in operation, by passing a gas through the vent conduit and vent opening.

In an embodiment a housing plate is arranged in the housing transverse to the longitudinal axis of the hollow shaft on a wall of the main duct, the housing plate comprises a duct opening to the main duct end section, an area on a valve side of the housing plate around the duct opening provides the ridge against which the vacuum valve closes, a vent side of the housing plate opposite the valve side comprises a vent groove in fluid communication with the vent opening and the vent conduit in the housing, the seal is mounted between the housing plate and the housing, and the vent opening is provided by the vent groove opening in the main duct end section between the vent side and the seal, in which very efficiently a number of functions are combined.

In an embodiment the vent groove comprises an annular vent groove section around the duct opening and at least one radial vent groove section that is radially directed from the annular vent groove section to the duct opening, and the annular vent groove section is in fluid communication with the vent conduit in the housing.

In an embodiment a first rotation bearing for the hollow shaft is arranged in the housing to interact with the hollow shaft to confine movement of the hollow shaft in a direction along its longitudinal axis towards the distal end of the hollow shaft.

In an embodiment a second rotation bearing for the hollow shaft is arranged in the housing to interact with the hollow shaft to confine movement of the hollow shaft in a direction along its longitudinal axis away from the distal end of the hollow shaft.

In an embodiment the hollow shaft comprises a thickened section which has an externally protruding outside circumference that is protruding with respect to an outside circumference of sections of the hollow shaft on either side of the thickened section as seen along the longitudinal direction of the hollow shaft, and the first and second rotation bearings are arranged on either side of the thickened section against the thickened section, which provides for rotational freedom of the hollow shaft while confining movement along and transverse to its longitudinal axis.

In an embodiment the first and second rotation bearings are arranged on opposing sides of the motor as seen along the longitudinal direction of the hollow shaft.

In an embodiment the housing comprises a motor part, in which the motor is arranged, and a valve part, in which the vacuum valve is arranged, both the motor part and the valve part of the housing having opposing first and second sides, and the second side of the motor part and the first side of the valve part being configured to match to allow assembly of the housing, and the distal end of the hollow shaft projects from the first side of the motor part of the housing.

In an embodiment the vacuum valve is provided in a vacuum valve module in which the vacuum valve is mounted to allow moving the vacuum valve to its open and closed positions, the valve module is arranged in the valve part of the housing and has an actuation conduit, such as a compressed air connection, to allow actuation of the vacuum valve, and the actuation connection of the vacuum valve module is connected to an actuation connection, such as a compressed air connection with a switch valve, provided on the outside of the valve part of the housing.

In an embodiment the first rotation bearing is arranged in the motor part of the housing between the motor and the first side of the motor part of the housing.

In an embodiment the housing plate is provided in the valve part of the housing.

In an embodiment the valve part of the housing comprises a cap part of the housing, in which the vacuum valve is arranged, and a central part of the housing, both the cap part and the central part of the housing having opposing first and second sides, the second side of the central part and the first side of the cap part being configured to match to allow assembly of the valve part of the housing, and the first side of the central part being the first side of the valve part of the housing.

In an embodiment the housing plate is arranged on the second side of the central part of the housing, and a section of the main duct is provided between the valve in the open position thereof and the housing plate.

In an embodiment the housing plate is attached to the second side of the central part of the housing.

In another aspect the invention provides a delta robot comprising an end-effector as referred to above.

### BRIEF DESCRIPTION OF THE DRAWINGS

Further features and advantages of the invention will become apparent from the description of the invention by way of non-limiting and non-exclusive embodiments. These embodiments are not to be construed as limiting the scope of protection. The person skilled in the art will realize that other alternatives and equivalent embodiments of the invention can be conceived and reduced to practice without departing from the scope of the present invention. Embodiments of the invention will be described with reference to the accompanying drawings, in which like or same reference symbols denote like, same or corresponding parts, and in which
Figure 1 shows a delta robot having an end-effector according to the invention;
Figures 2A and 2B show perspective views of an end-effector according to the invention;
Figure 3 shows a cross-section of the end-effector of figures 2A and 2B;
Figure 4 shows the cross-section of figure 3 taken apart in three parts;
Figure 5 shows a perspective view on the end-effector of figures 2A, 2B, 3 and 4 taken apart in three parts;
Figures 6A and 6B show top and bottom views of the housing plate, respectively, ; and
Figure 7 shows a cross-sectional detail, as indicated by VII in figure 3, of the housing plate, PS seal and central part of the housing.

### DETAILED DESCRIPTION OF EMBODIMENTS

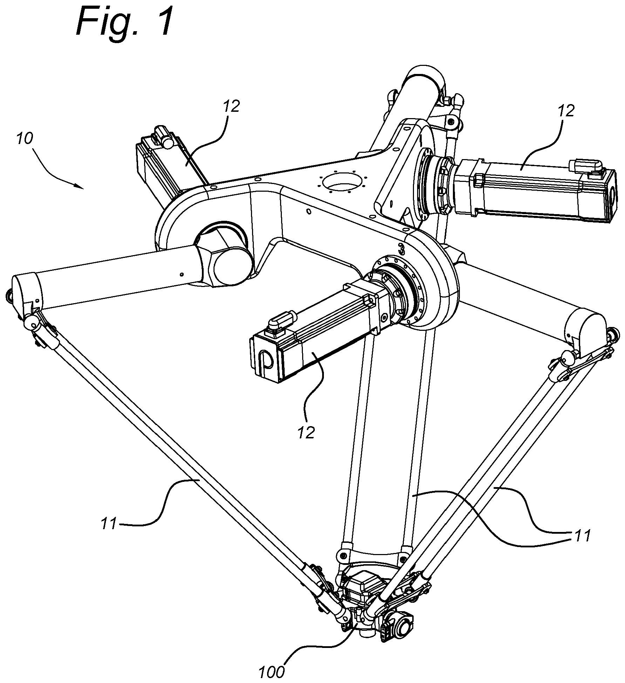

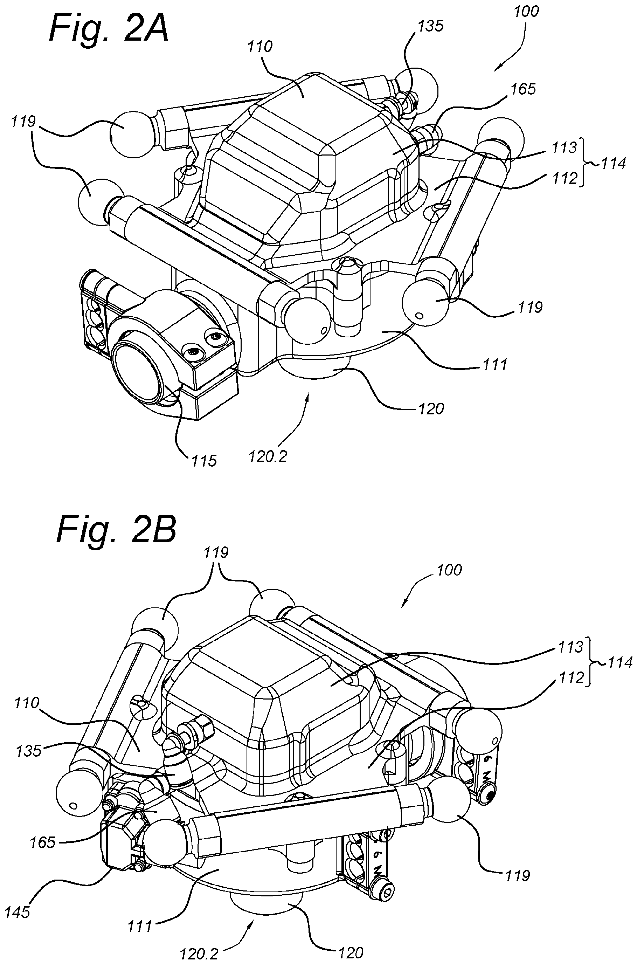

Figure 1 shows a delta robot 10 having an end-effector 100 according to the invention. The delta robot has three arms 11 that are each individually actuated by motors 12 for rotation and coupled to the end-effector to move the end-effector 100 around. Figures 2A and 2B shows the outside of the housing 110 of the end-effector 100 in more detail. Each arm 11 of the delta robot 10 is coupled to a respective pair of ball studs 119. The end-effector can be moved around in three dimensions very fast by individually actuating the three arms. The housing has a vacuum connection 115 for connecting to an external source of vacuum (not shown). The vacuum is passed through the end-effector to a hollow shaft 120 of the end-effector, of which the distal end 120.2 shows in figures 2A and 2B. The end-effector allows to rotate the hollow shaft 120 around its central longitudinal axis as well. A further device (not shown) can be mounted at the distal end 120.2 of the hollow shaft. Such further device can be a pick-up device for picking up products by vacuum suction. Switching of the vacuum allows products, or other objects, to be picked up and released again. Rotation of the hollow shaft 120 allows for a fourth degree of freedom for the pick-up device, being rotation about the longitudinal rotation axis of the hollow shaft.

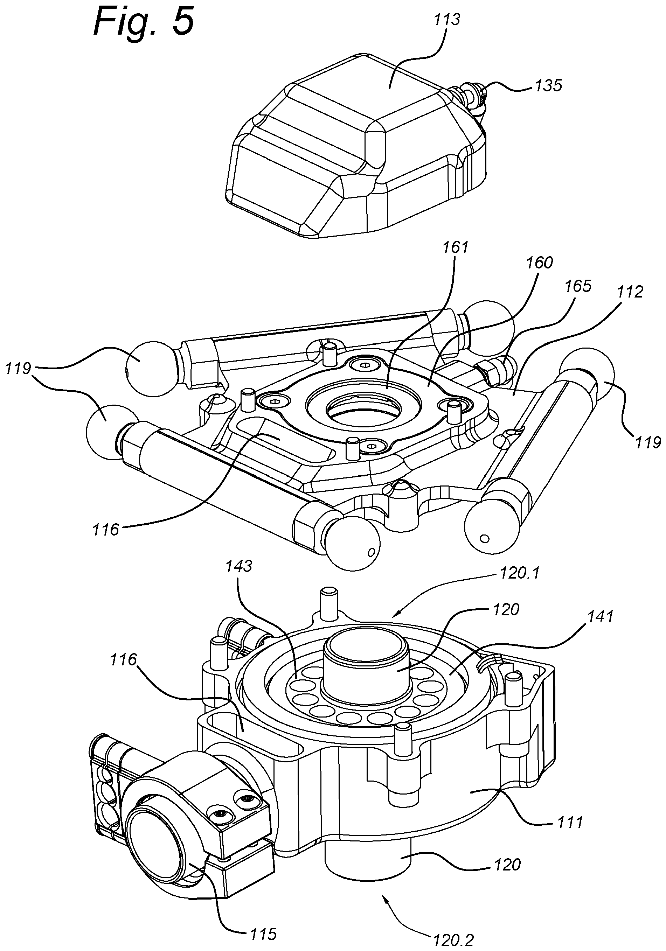

Referring to figures 2A, 2B, 3, 4 and 5, the housing 110 of the end-effector 100, in the embodiment shown, comprises a motor part 111 in which the motor 140 is arranged for driving rotational movement of the hollow shaft 120. The distal end 120.2 of the hollow shafts projects from the first side 111.1 of the motor part 111 of the housing 110. The motor 140 is an electrical motor having a stator 142 that is attached to the motor part 111 of the housing, and a rotor 141 that is attached to the hollow shaft 120. In the embodiment shown, the electrical motor 140 is a brushless torque motor having permanent magnets in the rotor 141 and electrical wiring coils in the stator 141. Such an electrical motor is known as such and allows for a position readout of the rotor through the electrical currents and voltages for the coils of the stator. This can be done by superposing an alternating voltage and measuring self-induction of the motor coils and measuring counter-electromotive force of the motor coils. These techniques are known as such and allow position readout without additional position sensors that would add volume and mass to the end-effector. The electrical wiring of the motor 140) is connected to an electrical motor connector 145 on the outside of the housing 110 for connection to an electrical drive cable. The rotor 141 is attached to a thickened section 122 of the hollow shaft 120 with a spacer element 143 in between. The thickened section 122 has an externally protruding wall that is protruding with respect to sections of the hollow shaft above and below the thickened section 122. The motor 140 is arranged around the longitudinal axis 120A and allows to rotate the hollow shaft around the longitudinal axis 120A of the hollow shaft 120.

A first rotation bearing 125 for the hollow shaft is arranged inside the motor part 111 of the housing 110 between the first side 111.1 of the motor part and the thickened section 122 of the hollow shaft. The motor part 111 has opposing first and second sides 111.1, 111.2 at its bottom and top ends, respectively, as shown in the figures. This configuration provides for a confinement of the movement of the hollow shaft 120 in a direction along its longitudinal axis 120A towards the distal end 120.2 of the hollow shaft. A second rotation bearing 126 for the hollow shaft is arranged on the other side of the thickened section 122 of the hollow shaft to interact with the hollow shaft to confine movement of the hollow shaft in a direction along its longitudinal axis 120A away from the distal end 120.2 of the hollow shaft. The arrangement of both the first and second rotation bearings 125, 126 on both sides of the thickened section 122 of the hollow shaft confines movement of the hollow axis 120 to a rotational movement about its longitudinal axis 120A only. The rotational bearings are arranged on both sides of the electrical motor as well as seen along the longitudinal direction of the hollow shaft. Rotational bearings are known as such.

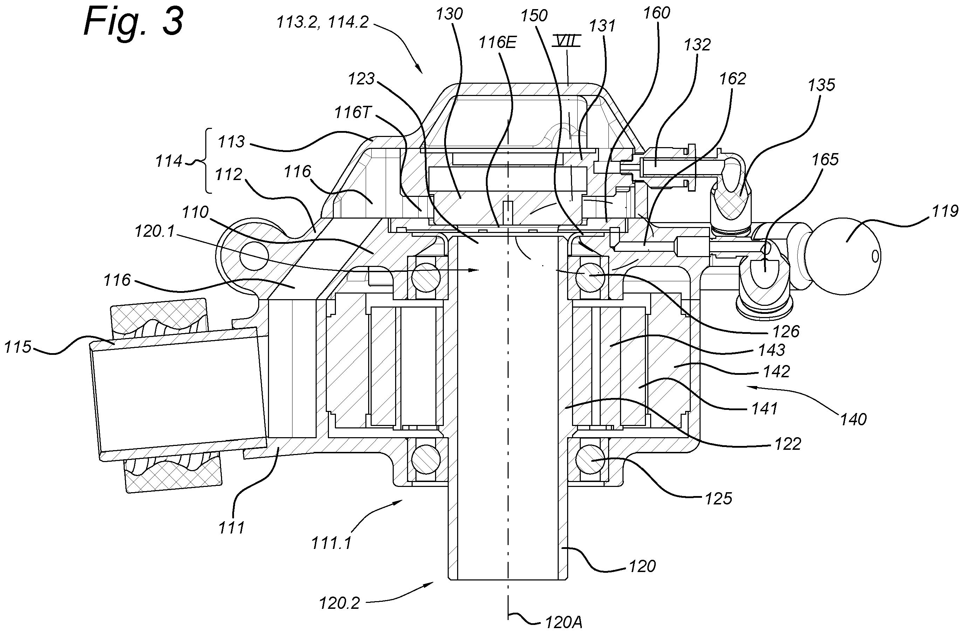

A vacuum valve 130 is arranged in the valve part 114 of the housing 110. The valve part has opposing first and second sides 114.1, 114.2 at its bottom and top ends, respectively, as shown in the figures. The first side 114.1 of the valve part 114 matches the second side 111.2 of the motor part 111 of the housing to allow assembly of the housing into the configuration as shown in figures 2A, 2B and 3. In the embodiment shown in the figures, the valve part 114 of the housing is made up of a cap part 113 of the housing and a central part 112 of the housing. The central part 112 and the cap part 113 of the housing each have opposing first and second sides 112.1, 113.1, 112.2, 113.2, the first side 112.1 of the central part 112 being the first side 114.1 of the valve part 114. The vacuum valve 130 is mounted in a vacuum valve module 131 that is arranged and fixed in the cap part 114 by, for instance, screws.

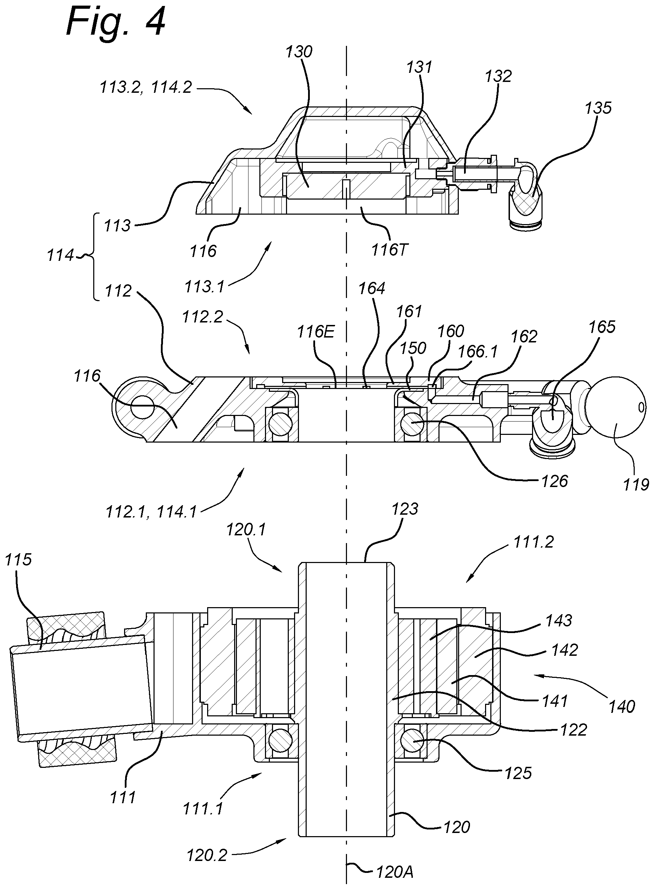

The vacuum valve module has an actuation conduit 132 for compressed air, which is connected to a valve actuation connection 135 in the form of a compressed air connection on the outside of the cap part 113. A valve actuation switch valve (not shown) can be provided in the valve actuation connection or elsewhere in a conduit connected to the valve actuation connection. In operation, a conduit for compressed air is connected to the valve actuation connection 135. The valve actuation switch valve can switch to pass the compressed air via the actuation conduit 132 to actuate the vacuum valve 130. In the embodiment shown the vacuum valve 130 is in the upward open position when the compressed air is switched off. When compressed air is provided to the vacuum valve 130 by switching the valve actuation switch valve to open, the vacuum valve 130 is actuated to a downward closed position. Figure 3 shows the vacuum valve 130 in the downward closed position thereof. Figure 4 shows the vacuum valve 130 in the upward open position. The vacuum valve 130, in the embodiment shown, is a circular plate of which the centre is aligned with the longitudinal axis 120A of the hollow shaft 120, and which can move up and down into the open and closed positions, respectively. The construction and mounting of the vacuum valve 130 is such in its vacuum module 131 that the vacuum valve is normally open when a pressure difference across the valve is below a threshold value.

The second rotational bearing 126 is arranged on the second side 112.2 of the central part 112 of the housing such that it is confined between said second side 112.2, the outside circumference of the hollow shaft 120 and the thickened part 122 of the hollow shaft in the assembled state of the central part 112 on the motor part 111 of the housing. The proximal end 120.1 of the hollow shaft is inside the housing and projects from the second end 111.2 of the motor part 111 of the housing into the central part 112 of the housing. The proximal end 120.1 of the central shaft has a proximal shaft opening 123 transverse to the longitudinal axis 120A of the hollow shaft. An annular PS seal 150 is arranged in a step on the second side 112.2 of the central part 112. A housing plate 160 is provided on said step on the second side 112.2 of the central part 112 to confine and mount the PS seal. The lip 151 of the PS seal seals against the outer circumference of the proximal end 120.1 of the hollow shaft. The other end of the PS seal is mounted on the wall of the main duct 116 of the housing.

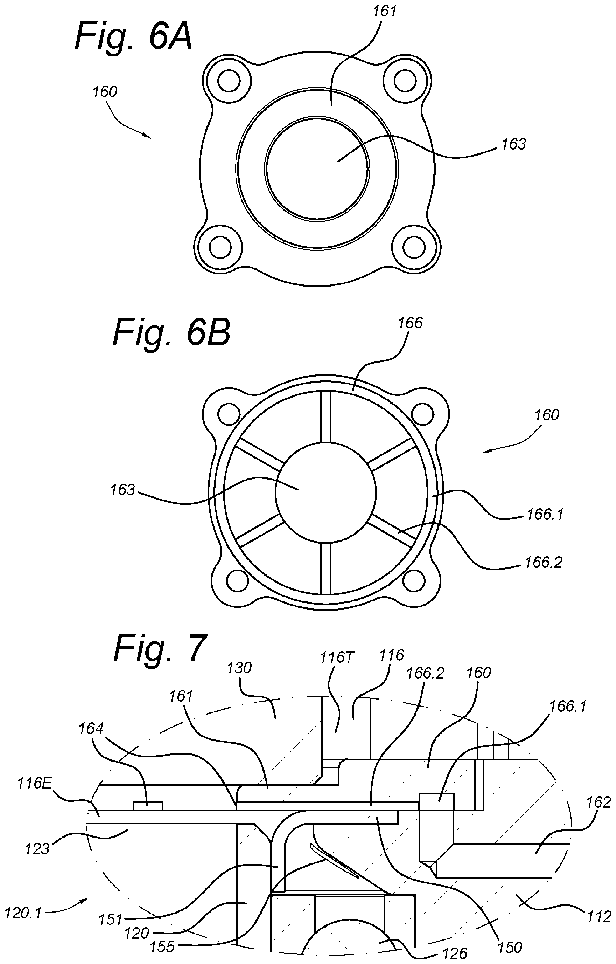

The housing plate 160 has a duct opening 163, and is shown in more detail in figures 6A and 6B. The duct opening 163 is circular and aligned with the proximal shaft opening 123. The longitudinal axis 120A of the hollow shaft passes through the centre of the duct opening 163. An upper valve side 160.2 of the housing plate 160 is directed to the vacuum valve 130. The area on the valve side 160.2 of the housing plate around the duct opening 163 provides for a ridge 161 on which the vacuum valve closes in the closed position of the vacuum valve 130 as is shown in figure 3 and in more detail in figure 7. The duct opening 163 in the housing plate 160 is closed by the vacuum valve 130 in the closed position thereof.

A main duct end section 116E of the main duct 116 is defined below the vacuum valve in the closed position thereof in the embodiment shown. The main duct end section 116E is adjacent to the proximal shaft opening 123 and extends along the longitudinal axis 120A of the hollow shaft 120 to the vacuum valve 130. The vacuum valve closes on the main duct end section 116E. The main duct end section 116E effectively is an extension of the hollow interior of the hollow shaft 120. The housing plate 160 is arranged shortly above the proximal end 120.1 of the hollow shaft to leave a small clearance between the housing plate and the proximal end 120.1. The clearance keeps rotation of the hollow shaft free from frictional forces by the housing plate 160 since there is no contact. The PS seal 150 seals the gap between the wall of the main duct end section 116E and thus of the main duct 116 with the hollow shaft 120. The small clearance between the housing plate 160 and the proximal end 120.1 of the hollow shaft 120 also provides that the volume of the main duct end section 116E is small as compared to the volume of the hollow interior of the hollow shaft.

The vent side 160.1 of the housing plate 160 opposite the valve side 160.2 comprises a vent groove 166 having an annular vent groove section 166.1 and radial vent groove sections 166.2 that extend from the annular vent groove section to the inner perimeter of the duct opening 163 in the housing plate. The housing plate 160 is arranged on the second side 112.2 of the central part 112 of the housing such that the annular vent groove section 166.2 is in fluid communication with a vent conduit 162 in de central part 112 of the housing. A vent connection 165 is provided on the outside of the central part 112 of the housing in fluid connection with the vent conduit 162. A vent switch valve can be provided in the vent connection 165 or in a conduit connected to the vent connection 165. The radial vent groove sections 116.2 together with the part of the PS seal 150 confined between the central part 112 of the housing and the housing plate 160 define a vent passage to multiple vent openings 164 into the main duct end section 116E, as is shown in more detail in figure 7.

In operation, a conduit for compressed air is connected to the vent connection 165. The vent switch valve can switch to pass the compressed air via the vent conduit 162 to vent the main duct end section 116E and the hollow shaft 120. This will only be done when the vacuum valve 130 is in the closed position to close the main duct end section 116E and interior of the hollow shaft off from the vacuum connection 115. Figure 7 also shows an opening of a connection duct 155 between the inside of the housing behind the lip 151 of the PS seal 150 and the outside of the housing 110. The connection duct 155 keeps the inside of the housing behind the lip of the PS seal above the second rotational bearing 126 at atmospheric pressure to keep a proper sealing of the PS seal lip 151 against the outside perimeter of the hollow shaft 120 while the interior of the hollow shaft is under vacuum. Having atmospheric pressure at that location within the housing is also advantageous with respect to the functioning of the second rotational bearing 126.

The main duct 116 extends from the vacuum connection 115 through the motor part 111, the central 112 and the cap part 113 of the housing. When a vacuum source, such as a vacuum pump, is connected to the vacuum connection 115 the vacuum is present in the sections of the main duct 116 in the motor part 111, central part 112 and cap part 113 of the housing 110 and also in the main duct end section 116E and the hollow interior of the hollow shaft in an open position of the vacuum valve 130, as is shown in figure 3. In operation a further device, such as a pick-up device, will be mounted on the distal end 120.2 of the hollow shaft 120 to pass the vacuum to the further device for use by the further device. Such further device is not shown in the figures.

A main duct transverse section 116T that is adjacent the main duct end section 116E is transverse to the main duct end section when considering a gas flow direction through the main duct 116. Transverse should be understood to mean that with a gas flow through the main duct 116 that a gas flow direction through the main duct transverse section 116T is transverse to a gas flow direction through the main duct end section 116E. Both the main duct transverse section 116T and the main duct end section 116E are part of the main duct 116. A fluid connection between the main duct transverse and end sections of the main duct is present when the vacuum valve 130 is in the upward open position, as shown in figure 4. Such configuration allows closing off of the main duct end section 116E, and of the hollow interior of the hollow shaft 120, from the vacuum connection 115 through a downward movement of the vacuum valve 130 to its closed position. In addition to the volume of the hollow interior of the hollow shaft 120 only a small volume of the main duct end section 116E remains in fluid communication with hollow interior of the hollow shaft 120 for venting or evacuating thereof to operate the further device at the distal end 120.2 of the hollow shaft. Effectively, only the hollow interior of the hollow shaft 120 requires venting or evacuating to operate the further device.

## Claims

1. An end-effector (100) for a delta robot (10) comprising actuated robot arms (11) for coupling to the end-effector to allow moving the end-effector by the robot arms, the end-effector comprising
- a housing (110) having a vacuum connection (115) for connecting to an external vacuum source, and having a main duct (116) in fluid communication with the vacuum connection;
- a hollow shaft (120) mounted in the housing to be rotatable around a longitudinal axis (120A) of the hollow shaft, wherein the hollow shaft has a hollow interior, a proximal shaft opening (123) at a proximal end (120.1) of the hollow shaft inside the housing to provide fluid communication between the hollow interior and the main duct (116), the hollow interior extends along the longitudinal axis of the hollow shaft to a distal end (120.2) of the hollow shaft, and the distal end of the hollow shaft projects from the housing, the distal end allowing for connecting a further device thereto and to pass vacuum from the interior of the hollow shaft and rotation by the hollow shaft to the further device, such as a pick-op device for picking up an object by vacuum suction;
- a vacuum valve (130) arranged in the main duct (116) of the housing between the proximal shaft opening (123) and the vacuum connection (115), wherein the vacuum valve provides for an open position to provide fluid communication between the proximal shaft opening and the vacuum connection to allow providing a vacuum in the hollow shaft when the vacuum connection is connected to a vacuum source and the vacuum valve provides for a closed position to close fluid communication between the proximal shaft opening and the vacuum connection; and
- a motor (140) attached to the housing for rotating the hollow shaft (120) around its longitudinal axis (120A) with respect to the housing,
wherein the motor is arranged in the housing around the longitudinal axis (120A) of the hollow shaft (120), the proximal shaft opening (123) is transverse to the longitudinal axis of the hollow shaft and provides fluid connection between the interior of the hollow shaft and a main duct end section (116E) of the main duct (116), which main duct end section is adjacent to the proximal shaft opening and extends along the longitudinal axis of the hollow shaft, and the vacuum valve in the closed position closes on or in the main duct end section.

2. The end-effector according to the preceding claim, wherein the motor (140) is an electrical motor having a rotor (141) and a stator (142), the rotor being attached to the hollow shaft (120) and the stator being attached to the housing (110),
optionally wherein the electrical motor (140) is a brushless torque motor allowing for a position readout of the rotor (141) through the electrical currents and voltages for driving the motor, optionally by at least one of superposing an alternating voltage and measuring self-induction of motor coils of the motor, and measuring counter-electromotive force of motor coils of the motor.

3. The end-effector according to any one of the preceding claims, wherein the vacuum valve (130) in the closed position is arranged in proximity to the proximal shaft opening (123).

4. The end-effector according to any one of the preceding claims, wherein the vacuum valve (130) is arranged transverse to the longitudinal axis (120A) of the hollow shaft (120) and is movable along a direction of the longitudinal axis of the hollow shaft towards the hollow shaft for the closed position of the vacuum valve,
optionally wherein a ridge (161) is provided in or delimits the main channel end section (116E), and the vacuum valve (130) closes against the ridge.

5. The end-effector according to any one of the preceding claims, wherein the main duct end section connects (116E) to a main duct transverse section (116T) of the main duct (116) which is transverse to the main duct end section, and the vacuum valve (130) closes in the main duct transverse section.

6. The end-effector according to any one of the preceding claims, wherein a seal (150) is provided between a wall of the main duct (116) in the housing and an outer circumference of the proximal end (120.1) of the hollow shaft (120),
optionally wherein the seal (150) comprises a PS seal arranged on the wall of the main duct, and a lip (151) of the PS seal seals against the outer circumference of the proximal end (120.1) of the hollow shaft (120).

7. The end-effector according to any one of the preceding claims, wherein a vent conduit (162) is provided in the housing in fluid communication with a vent opening (164) into the main duct end section (116E) between the vacuum valve (130) in the closed position thereof and the hollow shaft (120) to allow releasing the vacuum in the interior of the hollow shaft, in operation, by passing a gas through the vent conduit and vent opening.

8. The end-effector according to the preceding three claims, wherein a housing plate (160) is arranged in the housing transverse to the longitudinal axis (120A) of the hollow shaft (120) on a wall of the main duct (116), the housing plate comprises a duct opening (163) to the main duct end section (116E), an area on a valve side (160.2) of the housing plate around the duct opening provides a ttw ridge (161) against which the vacuum valve (130) closes, a vent side (160.1) of the housing plate opposite the valve side (160.2) comprises a vent groove (166) in fluid communication with the vent opening (164) and the vent conduit (162) in the housing, the seal is mounted between the housing plate and the housing, and the vent opening is provided by the vent groove opening into the main duct end section between the vent side and the seal,
optionally wherein the vent groove (166) comprises an annular vent groove section (166.1) around the duct opening (163) and at least one radial vent groove section (166.2) that is radially directed from the annular vent groove section to the duct opening, and the annular vent groove section is in fluid communication with the vent conduit (162) in the housing.

9. The end-effector according to any one of the preceding claims, wherein a first rotation bearing (125) for the hollow shaft (120) is arranged in the housing (110) to interact with the hollow shaft to confine movement of the hollow shaft in a direction along its longitudinal axis (120A) towards the distal end (120.2) of the hollow shaft.

10. The end-effector according to any one of the preceding claims, wherein a second rotation bearing (126) for the hollow shaft (120) is arranged in the housing (110) to interact with the hollow shaft to confine movement of the hollow shaft in a direction along its longitudinal axis (120A) away from the distal end (120.2) of the hollow shaft.

11. The end-effector according to the preceding two claims, wherein the hollow shaft (120) comprises a thickened section (122) which has an externally protruding outside circumference that is protruding with respect to an outside circumference of sections of the hollow shaft on either side of the thickened section (122) as seen along the longitudinal direction of the hollow shaft, and the first and second rotation bearings (125, 126) are arranged on either side of the thickened section against the thickened section.

12. The end-effector according to any one of the preceding three claims and claims 9 and 10, wherein the first and second rotation bearings (125, 126) are arranged on opposing sides of the motor (140) as seen along the longitudinal direction of the hollow shaft (120).

13. The end-effector according to any one of the preceding claims, wherein the housing (110) comprises a motor part (111), in which the motor is arranged, and a valve part (114), in which the vacuum valve (130) is arranged, both the motor part and the valve part of the housing having opposing first and second sides, and the second side (111.2) of the motor part (111) and the first side (114.1) of the valve part (114) being configured to match to allow assembly of the housing, and the distal end (120.2) of the hollow shaft (120) projects from the first side (111.1) of the motor part of the housing,
optionally wherein the vacuum valve (130) is provided in a vacuum valve module (131) in which the vacuum valve is mounted to allow moving the vacuum valve to its open and closed positions, the valve module is arranged in the valve part (114) of the housing and has an actuation conduit (132), such as a compressed air connection, to allow actuation of the vacuum valve, and the actuation connection of the vacuum valve module is connected to an actuation connection (135), such as a compressed air connection with a switch valve, provided on the outside of the valve part of the housing,
optionally wherein the first rotation bearing (125) is arranged in the motor part (111) of the housing between the motor (140) and the first side (111.1) of the motor part of the housing,
optionally wherein the housing plate (160) is provided in the valve part (114) of the housing,
optionally wherein the valve part (114) of the housing (110) comprises a cap part (113) of the housing, in which the vacuum valve (130) is arranged, and a central part (112) of the housing, both the cap part and the central part of the housing having opposing first and second sides, the second side (112.2) of the central part and the first side (113.1) of the cap part being configured to match to allow assembly of the valve part of the housing, and the first side (112.1) of the central part being the first side (114.1) of the valve part of the housing.
optionally wherein the housing plate (160) is arranged on the second side (112.2) of the central part (112) of the housing, and a section of the main duct (116) is provided between the valve in the open position thereof and the housing plate,
optionally wherein the housing plate (160) is attached to the second side (112.2) of the central part (112) of the housing (110).

14. A delta robot (10) comprising an end-effector (100) according to anyone of the preceding claims.

## Patentansprüche

1. Endeffektor (100) für einen Deltaroboter (10), der betätigte Roboterarme (11) zum Koppeln mit dem Endeffektor umfasst, um das Bewegen des Endeffektors durch die Roboterarme zu ermöglichen, wobei der Endeffektor Folgendes umfasst:
- ein Gehäuse (110) mit einem Vakuumanschluss (115) zum Anschließen an eine äußere Vakuumquelle und mit einer Hauptleitung (116), die in Fluidverbindung mit dem Vakuumanschluss steht;
- eine Hohlwelle (120), die in dem Gehäuse montiert ist, um um eine Längsachse (120A) der Hohlwelle drehbar zu sein, wobei die Hohlwelle einen hohlen Innenraum, eine proximale Wellenöffnung (123) an einem proximalen Ende (120.1) der Hohlwelle in dem Gehäuse aufweist, um eine Fluidverbindung zwischen dem hohlen Innenraum und der Hauptleitung (116) bereitzustellen, wobei sich der hohle Innenraum entlang der Längsachse der Hohlwelle zu einem distalen Ende (120.2) der Hohlwelle erstreckt und das distale Ende der Hohlwelle aus dem Gehäuse herausragt, wobei das distale Ende ermöglicht, eine weitere Vorrichtung daran anzuschließen und das Vakuum aus dem Inneren der Hohlwelle und die Drehung durch die Hohlwelle an die weitere Vorrichtung weiterzuleiten, wie zum Beispiel eine Aufnahmevorrichtung zum Aufnehmen eines Objekts durch Vakuumansaugung;
- ein Vakuumventil (130), das in der Hauptleitung (116) des Gehäuses zwischen der proximalen Wellenöffnung (123) und dem Vakuumanschluss (115) angeordnet ist, wobei das Vakuumventil eine offene Position bereitstellt, um eine Fluidverbindung zwischen der proximalen Wellenöffnung und dem Vakuumanschluss bereitzustellen, um das Bereitstellen eines Vakuums in der Hohlwelle zu ermöglichen, wenn der Vakuumanschluss mit einer Vakuumquelle verbunden ist und das Vakuumventil eine geschlossene Position bereitstellt, um die Fluidverbindung zwischen der proximalen Wellenöffnung und dem Vakuumanschluss zu schließen; und
- einen Motor (140), der an dem Gehäuse befestigt ist, um die Hohlwelle (120) um ihre Längsachse (120A) in Bezug auf das Gehäuse zu drehen,
wobei der Motor in dem Gehäuse um die Längsachse (120A) der Hohlwelle (120) herum angeordnet ist, die proximale Wellenöffnung (123) quer zu der Längsachse der Hohlwelle verläuft und eine Fluidverbindung zwischen dem Inneren der Hohlwelle und dem Hauptleitungsendabschnitt (116E) der Hauptleitung (116) bereitstellt, wobei der Hauptleitungsendabschnitt an die proximale Wellenöffnung angrenzt und sich entlang der Längsachse der Hohlwelle erstreckt und das Vakuumventil in der geschlossenen Position an dem oder in dem Hauptleitungsendabschnitt schließt.

2. Endeffektor nach dem vorhergehenden Anspruch, wobei der Motor (140) ein elektrischer Motor mit einem Rotor (141) und einem Stator (142) ist, wobei der Rotor an der Hohlwelle (120) befestigt ist und der Stator an dem Gehäuse (110) befestigt ist,
wobei optional der elektrische Motor (140) ein bürstenloser Torquemotor ist, der eine Positionsanzeige des Rotors (141) über die elektrischen Ströme und Spannungen zum Antreiben des Motors ermöglicht, optional durch Überlagern einer Wechselspannung und/oder Messen der Selbstinduktion von Motorspulen des Motors und/oder Messen der gegenelektromotorischen Kraft der Motorspulen des Motors.

3. Endeffektor nach einem der vorhergehenden Ansprüche, wobei das Vakuumventil (130) in der geschlossenen Position in der Nähe der proximalen Wellenöffnung (123) angeordnet ist.

4. Endeffektor nach einem der vorhergehenden Ansprüche, wobei das Vakuumventil (130) quer zu der Längsachse (120A) der Hohlwelle (120) angeordnet ist und entlang einer Richtung der Längsachse der Hohlwelle in Richtung der Hohlwelle für die geschlossene Position des Vakuumventils bewegbar ist,
wobei optional eine Rippe (161) in dem Hauptleitungsendabschnitt (116E) vorgesehen ist oder diesen begrenzt und das Vakuumventil (130) gegen die Rippe schließt.

5. Endeffektor nach einem der vorhergehenden Ansprüche, wobei der Hauptleitungsendabschnitt mit einem Hauptleitungsquerabschnitt (116T) der Hauptleitung (116) verbunden ist (116E), die quer zu dem Hauptleitungsendabschnitt verläuft, und das Vakuumventil (130) in dem Hauptleitungsquerabschnitt schließt.

6. Endeffektor nach einem der vorhergehenden Ansprüche, wobei eine Dichtung (150) zwischen einer Wand der Hauptleitung (116) in dem Gehäuse und einem Außenumfang des proximalen Endes (120.1) der Hohlwelle (120) vorgesehen ist,
wobei optional die Dichtung (150) eine PS-Dichtung umfasst, die an der Wand der Hauptleitung angeordnet ist, und eine Lippe (151) der PS-Dichtung gegen den Außenumfang des proximalen Endes (120.1) der Hohlwelle (120) abdichtet.

7. Endeffektor nach einem der vorhergehenden Ansprüche, wobei eine Entlüftungsleitung (162) in dem Gehäuse in Fluidverbindung mit einer Entlüftungsöffnung (164) in dem Hauptleitungsendabschnitt (116E) zwischen dem Vakuumventil (130) in dessen geschlossener Position und der Hohlwelle (120) vorgesehen ist, um im Betrieb das Aufheben des Vakuums in dem Inneren der Hohlwelle durch Leiten eines Gases durch die Entlüftungsleitung und die Entlüftungsöffnung zu ermöglichen.

8. Endeffektor nach den vorhergehenden drei Ansprüchen, wobei eine Gehäuseplatte (160) in dem Gehäuse quer zu der Längsachse (120A) der Hohlwelle (120) an einer Wand der Hauptleitung (116) angeordnet ist, die Gehäuseplatte eine Leitungsöffnung (163) zu dem Hauptleitungsendabschnitt (116E) umfasst, ein Bereich auf einer Ventilseite (160.2) der Gehäuseplatte um die Leitungsöffnung herum eine Rippe (161) bereitstellt, gegen die das Vakuumventil (130) schließt, eine der Ventilseite (160.2) gegenüberliegende Entlüftungsseite (160.1) der Gehäuseplatte eine Entlüftungsnut (166) umfasst, die in Fluidverbindung mit der Entlüftungsöffnung (164) und der Entlüftungsleitung (162) in dem Gehäuse steht, die Dichtung zwischen der Gehäuseplatte und dem Gehäuse montiert ist und die Entlüftungsöffnung durch die Entlüftungsnut bereitgestellt wird, die sich in den Hauptleitungsendabschnitt zwischen der Entlüftungsseite und der Dichtung öffnet,
wobei optional die Entlüftungsnut (166) einen ringförmigen Entlüftungsnutabschnitt (166.1) um die Leitungsöffnung (163) herum und mindestens einen radialen Entlüftungsnutabschnitt (166.2) umfasst, der radial von dem ringförmigen Entlüftungsnutabschnitt zu der Leitungsöffnung gerichtet ist, und der ringförmige Entlüftungsnutabschnitt in Fluidverbindung mit der Entlüftungsleitung (162) in dem Gehäuse steht.

9. Endeffektor nach einem der vorhergehenden Ansprüche, wobei ein erstes Drehlager (125) für die Hohlwelle (120) in dem Gehäuse (110) angeordnet ist, um mit der Hohlwelle zusammenzuwirken, um die Bewegung der Hohlwelle in einer Richtung entlang ihrer Längsachse (120A) in Richtung des distalen Endes (120.2) der Hohlwelle zu beschränken.

10. Endeffektor nach einem der vorhergehenden Ansprüche, wobei ein zweites Drehlager (126) für die Hohlwelle (120) in dem Gehäuse (110) angeordnet ist, um mit der Hohlwelle zusammenzuwirken, um die Bewegung der Hohlwelle in einer Richtung entlang ihrer Längsachse (120A) weg von dem distalen Ende (120.2) der Hohlwelle zu beschränken.

11. Endeffektor nach den vorhergehenden zwei Ansprüchen, wobei die Hohlwelle (120) einen verdickten Abschnitt (122) umfasst, der einen nach außen vorspringenden Außenumfang aufweist, der in Bezug auf einen Außenumfang von Abschnitten der Hohlwelle entlang der Längsrichtung der Hohlwelle gesehen auf beiden Seiten des verdickten Abschnitts (122) hervorsteht, und das erste und zweite Drehlager (125, 126) auf beiden Seiten des verdickten Abschnitts gegen den verdickten Abschnitt angeordnet sind.

12. Endeffektor nach einem der vorhergehenden drei Ansprüche und den Ansprüchen 9 und 10, wobei das erste und zweite Drehlager (125, 126) entlang der Längsrichtung der Hohlwelle (120) gesehen auf gegenüberliegenden Seiten des Motors (140) angeordnet sind.

13. Endeffektor nach einem der vorhergehenden Ansprüche, wobei das Gehäuse (110) einen Motorteil (111), in dem der Motor angeordnet ist, und einen Ventilteil (114) umfasst, in dem das Vakuumventil (130) angeordnet ist, wobei sowohl der Motorteil als auch der Ventilteil des Gehäuses gegenüberliegende erste und zweite Seiten aufweisen und die zweite Seite (111.2) des Motorteils (111) und die erste Seite (114.1) des Ventilteils (114) konfiguriert sind, um zusammenzupassen, um die Montage des Gehäuses zu ermöglichen, und das distale Ende (120.2) der Hohlwelle (120) aus der ersten Seite (111.1) des Motorteils des Gehäuses herausragt,
wobei optional das Vakuumventil (130) in einem Vakuumventilmodul (131) vorgesehen ist, in dem das Vakuumventil montiert ist, um das Bewegen des Vakuumventils in seine offene und geschlossene Position zu ermöglichen, wobei das Ventilmodul in dem Ventilteil (114) des Gehäuses angeordnet ist und eine Betätigungsleitung (132) aufweist, wie zum Beispiel eine Druckluftverbindung, um die Betätigung des Vakuumventils zu ermöglichen, und die Betätigungsverbindung des Vakuumventilmoduls mit einer Betätigungsverbindung (135) verbunden ist, wie zum Beispiel einer Druckluftverbindung mit einem Schaltventil, die an der Außenseite des Ventilteils des Gehäuses vorgesehen ist,
wobei optional das erste Drehlager (125) in dem Motorteil (111) des Gehäuses zwischen dem Motor (1140) und der ersten Seite (111.1) des Motorteils des Gehäuses angeordnet ist,
wobei optional die Gehäuseplatte (160) in dem Ventilteil (114) des Gehäuses vorgesehen ist,
wobei optional der Ventilteil (114) des Gehäuses (110) einen Kappenteil (113) des Gehäuses, in dem das Vakuumventil (130) angeordnet ist, und einen Mittelteil (112) des Gehäuses umfasst, wobei sowohl der Kappenteil als auch der Mittelteil des Gehäuses gegenüberliegende erste und zweite Seiten aufweisen, wobei die zweite Seite (112.2) des Mittelteils und die erste Seite (113.1) des Kappenteils konfiguriert sind, um zusammenzupassen, um die Montage des Ventilteils des Gehäuses zu ermöglichen, und die erste Seite (112.1) des Mittelteils die erste Seite (114.1) des Ventilteils des Gehäuses ist.
wobei optional die Gehäuseplatte (160) auf der zweiten Seite (112.2) des Mittelteils (112) des Gehäuses angeordnet ist und ein Abschnitt der Hauptleitung (116) zwischen dem Ventil in dessen offener Position und der Gehäuseplatte vorgesehen ist,
wobei optional die Gehäuseplatte (160) an der zweiten Seite (112.2) des Mittelteils (112) des Gehäuses (110) befestigt ist.

14. Deltaroboter (10), der einen Endeffektor (100) nach einem der vorhergehenden Ansprüche umfasst.

## Revendications

1. Effecteur terminal (100) pour un robot delta (10) comprenant des bras de robot actionnés (11) pour s'accoupler à l'effecteur terminal pour permettre de déplacer l'effecteur terminal par les bras du robot, l'effecteur terminal comprenant
- un logement (110) ayant une connexion à vide (115) pour se connecter à une source de vide externe, et ayant un conduit principal (116) en communication fluidique avec la connexion à vide ;
- un arbre creux (120) monté dans le logement pour être rotatif autour d'un axe longitudinal (120A) de l'arbre creux, où l'arbre creux a un intérieur creux, une ouverture d'arbre proximale (123) à une extrémité proximale (120.1) de l'arbre creux à l'intérieur du logement pour fournir une communication fluidique entre l'intérieur creux et le conduit principal (116), l'intérieur creux s'étend le long de l'axe longitudinal de l'arbre creux jusqu'à une extrémité distale (120.2) de l'arbre creux et l'extrémité distale de l'arbre creux fait saillie du logement, l'extrémité distale permettant de connecter un autre dispositif à celui-ci et de passer le vide de l'intérieur de l'arbre creux et la rotation par l'arbre creux vers l'autre dispositif, tel qu'un dispositif de ramassage pour ramasser un objet par aspiration sous vide ;
- une valve de vide (130) disposée dans le conduit principal (116) du logement entre l'ouverture d'arbre proximal (123) et la connexion à vide (115), où la valve de vide fournit une position ouverte pour fournir une communication fluidique entre l'ouverture d'arbre proximale et la connexion à vide pour permettre de fournir un vide dans l'arbre creux lorsque la connexion à vide est connectée à une source de vide et la valve de vide fournit une position fermée pour fermer la communication fluidique entre l'ouverture de arbre proximale et la connexion à vide; et
- un moteur (140) fixé au logement pour faire tourner l'arbre creux (120) autour de son axe longitudinal (120A) par rapport au logement,
où le moteur est disposé dans le logement autour de l'axe longitudinal (120A) de l'arbre creux (120), l'ouverture d'arbre proximale (123) est transversale à l'axe longitudinal de l'arbre creux et fournit une connexion fluidique entre l'intérieur de l'arbre creux et une section d'extrémité de conduit principal (116E) du conduit principal (116), laquelle section d'extrémité de conduit principal est adjacente à l'ouverture d'arbre proximal et s'étend le long de l'axe longitudinal de l'arbre creux, et la valve de vide en position fermée se ferme sur ou dans la section d'extrémité du conduit principal.

2. Effecteur terminal selon la revendication précédente, où le moteur (140) est un moteur électrique ayant un rotor (141) et un stator (142), le rotor étant fixé à l'arbre creux (120) et le stator étant fixé au logement (110),
où facultativement, le moteur électrique (140) est un moteur couple sans balais permettant une lecture de position du rotor (141) à travers les courants électriques et tensions pour entraîner le moteur, facultativement par au moins l'un parmi une superposition d'une tension alternative et une mesure de l'auto-induction des bobines du moteur et une mesure de la force contre-électromotrice des bobines du moteur.

3. Effecteur terminal selon l'une quelconque des revendications précédentes, où la valve de vide (130) en position fermée est disposée à proximité de l'ouverture d'arbre proximal (123).

4. Effecteur terminal selon l'une quelconque des revendications précédentes, où la valve de vide (130) est disposée transversale à l'axe longitudinal (120A) de l'arbre creux (120) et est mobile le long d'une direction de l'axe longitudinal de l'arbre creux vers l'arbre creux pour la position fermée de la valve de vide,
où facultativement, une crête (161) est fournie dans ou délimite la section d'extrémité de canal principal (116E), et la valve de vide (130) se ferme contre la crête.

5. Effecteur terminal selon l'une quelconque des revendications précédentes, où la section d'extrémité de conduit principal se connecte (116E) à une section transversale de conduit principal (116T) du conduit principal (116) qui est transversale à la section d'extrémité de conduit principal, et la valve de vide (130) se ferme dans la section transversale du conduit principal.

6. Effecteur terminal selon l'une quelconque des revendications précédentes, où un joint (150) est fourni entre une paroi du conduit principal (116) dans le logement et une circonférence extérieure de l'extrémité proximale (120.1) de l'arbre creux (120),
où facultativement, le joint (150) comprend un joint PS disposé sur la paroi du conduit principal, et une lèvre (151) du joint PS scelle contre la circonférence extérieure de l'extrémité proximale (120.1) de l'arbre creux (120).

7. Effecteur terminal selon l'une quelconque des revendications précédentes, où un conduit d'évent (162) est fourni dans le logement en communication fluidique avec une ouverture d'évent (164) dans la section d'extrémité du conduit principal (116E) entre la valve de vide (130) dans la position fermée de celle-ci et l'arbre creux (120) pour permettre de libérer le vide à l'intérieur de l'arbre creux, en fonctionnement, en passant un gaz à travers le conduit d'évent et l'ouverture d'évent.

8. Effecteur terminal selon les trois revendications précédentes, où une plaque de logement (160) est disposée dans le logement transversale à l'axe longitudinal (120A) de l'arbre creux (120) sur une paroi du conduit principal (116), la plaque de logement comprend une ouverture de conduit (163) vers la section d'extrémité du conduit principal (116E), une zone sur un côté de valve (160.2) de la plaque de logement autour de l'ouverture du conduit fournit une arête (161) contre laquelle la valve de vide (130) se ferme, un côté d'évent (160.1) de la plaque de logement opposé au côté de valve (160.2 ) comprend une rainure d'évent (166) en communication fluidique avec l'ouverture d'évent (164) et le conduit d'évent (162) dans le logement, le joint est monté entre la plaque de logement et le logement, et l'ouverture d'évent est fournie par la rainure d'évent s'ouvrant dans la section d'extrémité du conduit principal entre le côté d'évent et le joint,
où facultativement, la rainure d'évent (166) comprend une section de rainure d'évent annulaire (166.1) autour de l'ouverture de conduit (163) et au moins une section de rainure d'évent radiale (166.2) qui est dirigée radialement de la section de rainure d'évent annulaire à l'ouverture de conduit, et la section de rainure d'évent annulaire est en communication fluidique avec le conduit d'évent (162) dans le logement.

9. Effecteur terminal selon l'une quelconque des revendications précédentes, où un premier palier de rotation (125) pour l'arbre creux (120) est disposé dans le logement (110) pour interagir avec l'arbre creux pour confiner le mouvement de l'arbre creux dans une direction le long de son axe longitudinal (120A) vers l'extrémité distale (120.2) de l'arbre creux.

10. Effecteur terminal selon l'une quelconque des revendications précédentes, où un deuxième palier de rotation (126) pour l'arbre creux (120) est disposé dans le logement (110) pour interagir avec l'arbre creux pour confiner le mouvement de l'arbre creux dans une direction le long de son axe longitudinal (120A) loin de l'extrémité distale (120.2) de l'arbre creux.

11. Effecteur terminal selon les deux revendications précédentes, où l'arbre creux (120) comprend une section épaissie (122) qui a une circonférence extérieure saillante extérieurement qui fait saillie par rapport à une circonférence extérieure de sections de l'arbre creux de chaque côté de la section épaissie (122) comme vue le long de la direction longitudinale de l'arbre creux, et les premier et deuxièmes paliers de rotation (125, 126) sont disposés de chaque côté de la section épaissie contre la section épaissie.

12. Effecteur terminal selon l'une quelconque des trois revendications précédentes et les revendications 9 et 10, où les premier et deuxième paliers de rotation (125, 126) sont disposés sur des côtés opposés du moteur (140), comme vu le long de la direction longitudinale de l'arbre creux (120).

13. Effecteur terminal selon l'une quelconque des revendications précédentes, où le logement (110) comprend une partie moteur (111), dans laquelle le moteur est disposé, et une partie valve (114), dans laquelle la valve de vide (130) est disposée, la partie moteur et la partie valve du logement ayant toutes deux des premier et deuxième côtés opposés, et le deuxième côté (111.2) de la partie moteur (111) et le premier côté (114.1) de la partie valve (114 ) étant configurés pour correspondre pour permettre l'assemblage du logement, et l'extrémité distale (120.2) de l'arbre creux (120) fait saillie du premier côté (111.1) de la partie moteur du logement,
où facultativement, la valve de vide (130) est fournie dans un module de valve de vide (131) dans lequel la valve de vide est montée pour permettre de déplacer la valve de vide vers ses positions ouverte et fermée, le module de valve est disposé dans la partie de valve (114) du logement et a un conduit d'actionnement (132), tel qu'une connexion d'air comprimé, pour permettre l'actionnement de la valve de vide, et la connexion d'actionnement du module de valve de vide est connectée à une connexion d'actionnement (135), tel qu'une connexion d'air comprimé avec une valve de commutation, fournie à l'extérieur de la partie valve du logement,
où facultativement, le premier palier de rotation (125) est disposé dans la partie moteur (111) du logement entre le moteur (140) et le premier côté (111.1) de la partie moteur du logement,
où facultativement, la plaque de logement (160) est fournie dans la partie valve (114) du logement,
où facultativement, la partie valve (114) du logement (110) comprend une partie capuchon (113) du logement, dans laquelle la valve de vide (130) est disposée, et une partie centrale (112) du logement, la partie capuchon et la partie centrale du logement ayant toutes deux des premier et deuxième côtés opposés, le deuxième côté (112.2) de la partie centrale et le premier côté (113.1) de la partie capuchon étant configurés pour correspondre pour permettre l'assemblage de la partie valve du logement, et le premier côté (112.1) de la partie centrale étant le premier côté (114.1) de la partie valve du logement.
où facultativement, la plaque de logement (160) est disposée sur le deuxième côté (112.2) de la partie centrale (112) du logement, et une section du conduit principal (116) est fournie entre la valve en position ouverte de celle-ci et la plaque de logement,
où facultativement, la plaque de logement (160) est fixée au deuxième côté (112.2) de la partie centrale (112) du logement (110).

14. Robot delta (10) comprenant un effecteur terminal (100) selon l'une quelconque des revendications précédentes.
